# EUROPEAN PATENT APPLICATION

(11) **EP 4 822 385 A1**
(43) Date of publication of application: **14.10.2026**
(21) Application number: 26167909.6
(22) Date of filing: 26.03.2026
(51) Int. Cl.: G01S 5/02, G01S 5/06, G01S 5/10, G01S 7/00, G01S 13/00, H04W 64/00

(54) **METHODS AND DEVICES FOR WIFI FINE TIMING MEASUREMENT**

(30) Priority: 08.04.2025 US 202563785115 P; 16.07.2025 US 202519270965
(71) Applicant: Samsung Electronics Co., Ltd., Suwon-si, Gyeonggi-do 16677 (KR)
(72) Inventor: YAN, Aiguo, San Jose, CA, 95134 (US); YANG, Zigui, San Jose, CA, 95134 (US); KANDALA, Srinivas, San Jose, CA, 95134 (US); GIDVANI, Ravi, San Jose, CA, 95134 (US); VISHNUBHOTLA VIJAY, Aditya, San Jose, CA, 95134 (US)
(74) Representative: Kuhnen & Wacker Patent- und Rechtsanwaltsbüro PartG mbB

(57) **Abstract**

A method for selecting measurements for positioning is disclosed. The method may include calculating (405), by an initiator device, a plurality of distance measurements, determining (410), by the initiator device, that a difference between a first value and a second value of the plurality of distance measurements is greater than a threshold, in response to the difference being greater than the threshold, dividing (415), by the initiator device, the plurality of distance measurements into N clusters, selecting (420), by the initiator device (108), a first cluster from among the N clusters based on a number of distance measurements in the first cluster, and outputting (425), by the initiator device, a distance between the initiator device and a responder device based on the distance measurements in the first cluster.

## Description

### BACKGROUND

### 1. FIELD

Aspects of some embodiments relate to wireless communications. For example, aspects of some embodiments of the present disclosure relate to improvements to positioning utilizing Wi-Fi Fine Timing Management (FTM).

### 2. DESCRIPTION OF THE RELATED ART

There are several approaches for positioning, such as timing-based positioning. Multiple technologies, such as Bluetooth, Wi-Fi, Ultra-Wideband (UWB), Cellular, and/or Global Navigation Satellite System (GNSS), are available to enable the timing-based positioning. Wi-Fi Fine Timing Measurement (FTM) may be suitable in terms of positioning due to its wide availability and reasonable accuracy. However, the raw FTM measurements may be environmentally dependent and noisy. Furthermore, the timing-based positioning may increase resource overhead because the estimation uses both downlink resource signal and uplink resource signal.

The above information disclosed in this Background section is only for enhancement of understanding of the background and therefore the information discussed in this Background section does not necessarily constitute prior art.

### SUMMARY

One or more aspects of the present disclosure provide a method for determining measurements estimated by Wi-Fi Fine-Timing Measurement (FTM) for positioning that improves the accuracy of positioning and reduces or minimizes resource utilization for positioning.

One or more aspects of the present disclosure also provide an initiator device (e.g., a UE or an access point) for determining measurements estimated by the Wi-Fi FTM for positioning that improves the accuracy of positioning and reduces resource utilization for positioning.

One or more aspects of the present disclosure also provide a system for determining measurements estimated by the Wi-Fi FTM for positioning that improves the accuracy of positioning and reduces resource utilization for positioning.

Additional aspects will be set forth in part in the description which follows and, in part, will be apparent from the description, or may be learned by practice of the presented embodiments of the disclosure.

According to one or more embodiments of the present disclosure, a method may include calculating, by an initiator device, a plurality of distance measurements, determining, by the initiator device, that a difference between a first value and a second value of the plurality of distance measurements is greater than a threshold, in response to the difference being greater than the threshold, dividing, by the initiator device, the plurality of distance measurements into N clusters, selecting, by the initiator device, a first cluster from among the N clusters based on a number of distance measurements in the first cluster, and outputting, by the initiator device, a distance between the initiator device and the responder device based on the distance measurements in the first cluster.

In one or more embodiments, each of the plurality of distance measurements may include a value indicating an estimated distance between the initiator device and the responder device, and where the first value may be a maximum value among the plurality of distance measurements, and the second value may be a minimum value among the plurality of distance measurements.

In one or more embodiments, the threshold may be a value associated with an estimated distance between the initiator device and the responder device.

In one or more embodiments, the calculating of the plurality of distance measurements may include arranging the plurality of distance measurements in an ascending order from a minimum value in the plurality of distance measurements to a maximum value in the plurality of distance measurements.

In one or more embodiments, the selecting of the first cluster may include determining that the number of the distance measurements in the first cluster is greater than a value associated with a percentage of a total number of the plurality of distance measurements, and selecting the first cluster for outputting the distance between the initiator device and the responder device.

In one or more embodiments, the selecting of the first cluster may include determining that the number of the distance measurements in the first cluster is greater than one N^{th} of a total number of the plurality of distance measurements, and selecting the first cluster for outputting the distance between the initiator device and the responder device.

In one or more embodiments, N may be an integer smaller than or equal to three.

In one or more embodiments, the method may further include dividing, by the initiator device, the first cluster into M clusters, and selecting, by the initiator device, a second cluster from among the M clusters based on a number of distance measurements in the second cluster.

In one or more embodiments, the method may further include, in response to the difference being smaller than or equal to the threshold, outputting the distance between the initiator device and the responder device based on the plurality of distance measurements.

In one or more embodiments, the selecting of the first cluster may include determining that a difference between a maximum value and a minimum value of the distance measurements in the first cluster is smaller than or equal to the threshold, and selecting the first cluster for outputting the distance between the initiator device and the responder device.

According to one or more embodiments of the present disclosure, an initiator device may include a processing circuit, the processing circuit being configured to perform calculating a plurality of distance measurements, determining that a difference between a first value and a second value of the plurality of distance measurements is greater than a threshold, in response to the difference being greater than the threshold, dividing the plurality of distance measurements into N clusters, selecting a first cluster from among the N clusters based on a number of distance measurements in the first cluster, and outputting a distance between the initiator device and a responder device based on the distance measurements in the first cluster.

In one or more embodiments, each of the plurality of distance measurements may include a value indicating an estimated distance between the initiator device and the responder device, and where the first value may be a maximum value among the plurality of distance measurements, and the second value may be a minimum value among the plurality of distance measurements.

In one or more embodiments, the threshold may be a value associated with an estimated distance between the initiator device and the responder device.

In one or more embodiments, the calculating of the plurality of distance measurements may include arranging the plurality of distance measurements in an ascending order from a minimum value in the plurality of distance measurements to a maximum value in the plurality of distance measurements.

In one or more embodiments, the selecting of the first cluster may include determining that a number of the distance measurements in the first cluster is greater than a value associated with a percentage of a total number of the plurality of distance measurements, and selecting the first cluster for outputting the distance between the initiator device and the responder device.

In one or more embodiments, the selecting of the first cluster may include determining that the number of the distance measurements in the first cluster is greater than one N^{th} of a total number of the plurality of distance measurements, and selecting the first cluster for outputting the distance between the initiator device and the responder device.

In one or more embodiments, N may be an integer smaller than or equal to three.

In one or more embodiments, the processing circuit may be further configured to perform, in response to the difference being smaller than or equal to the threshold, outputting the distance between the initiator device and the responder device based on the plurality of distance measurements.

In one or more embodiments, the selecting of the first cluster may include determining that a difference between a maximum value and a minimum value of the distance measurements in the first cluster is smaller than or equal to the threshold, and selecting the first cluster for outputting the distance between the initiator device and the responder device.

According to one or more embodiments of the present disclosure, a system may include an initiator device and a responder device. The initiator device may be configured to: calculate a plurality of distance measurements, determine that a difference between a first value and a second value of the plurality of distance measurements is greater than a threshold, in response to the difference being greater than the threshold, divide the plurality of distance measurements into N clusters, select a first cluster from among the N clusters based on a number of distance measurements in the first cluster, and output a distance between the initiator device and the responder device based on the distance measurements in the first cluster.

In one or more embodiments, each of the plurality of distance measurements may include a value indicating an estimated distance between the initiator device and the responder device, and where the first value may be a maximum value among the plurality of distance measurements, and the second value may be a minimum value among the plurality of distance measurements.

In one or more embodiments, the selecting of the first cluster may include determining that the number of the distance measurements in the first cluster is greater than a value associated with a percentage of a total number of the plurality of distance measurements, and selecting the first cluster for outputting the distance between the initiator device and the responder device.

In one or more embodiments, the selecting of the first cluster may include determining that a difference between a maximum value and a minimum value of the distance measurements in the first cluster is smaller than or equal to the threshold, and selecting the first cluster for outputting the distance between the initiator device and the responder device.

According to one or more embodiments of the present disclosure, the method provides a method for determining reliable measurements for positioning. The method disclosed in the present disclosure may efficiently select reliable measurements by clustering the measurements based on a number of measurements in a cluster and a difference between the maximum value and the minimum value of measurements in the cluster. By efficiently determining reliable measurements for the Wi-Fi FTM and/or other approaches for positioning, the accuracy of estimated distance between the initiator device and the responder device may be improved. Furthermore, the computer performance of the initiator device and/or the responder device may also be improved, because an unnecessary waste of the resource and bandwidth of the initiator device and/or the responder device on computing unreliable/additional measurements may be prevented or reduced.

### BRIEF DESCRIPTION OF THE DRAWINGS

The above and other aspects of the present disclosure will be more clearly understood from the following detailed description of the illustrative, non-limiting embodiments with reference to the accompanying drawings.
FIGS. 1A and 1B are a system diagram illustrating an example network environment, according to one or more embodiments of the present disclosure.
FIGS. 2A-2C are diagrams each depicting an example method for positioning.
FIG. 3 is a diagram depicting an example method for determining measurements for positioning, according to one or more embodiments.
FIG. 4 is a flowchart depicting an example method for determining measurements for positioning, according to one or more embodiments of the present disclosure.
FIG. 5 is a block diagram of an electronic device in a network environment, according to one or more embodiments of the present disclosure.
FIG. 6 shows a system including a UE and an access point in communication with each other, according to one or more embodiments of present disclosure.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the terms "or" and "and/or" include any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

The electronic or electric devices and/or any other relevant devices or components according to embodiments of the present disclosure described herein may be implemented utilizing any suitable hardware, firmware (e.g., an application-specific integrated circuit (ASIC)), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the spirit and scope of the example embodiments of the present disclosure.

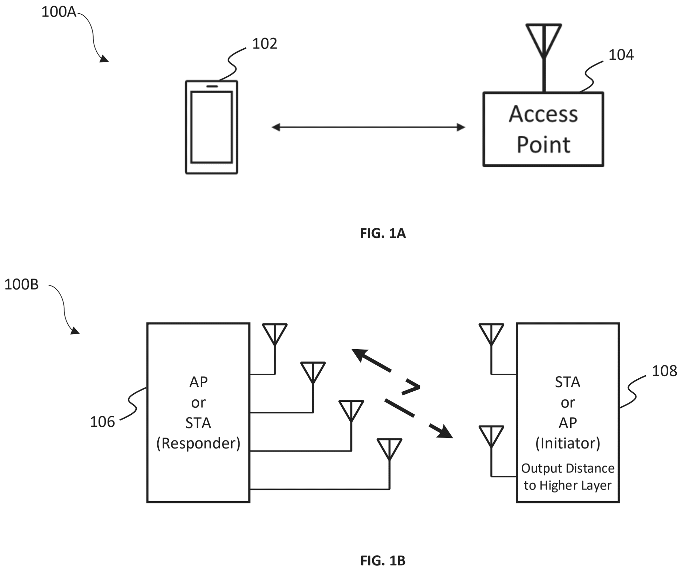

FIGS. 1A and 1B are a system diagram illustrating an example network environment in which the present wireless communication systems and methods may be applied according to one or more embodiments.

Referring to FIG. 1A, a wireless communication system 100A includes an access point (AP) 104 that may communicate with a wireless station 102. The wireless communication system 100A may be a wireless local area network (WLAN) implemented utilizing any of the IEEE 802.11 standards. The access point 104 can communicate with one or more wireless stations 102 with which it is associated using a shared local area network protocol and over one or more shared frequency spectrum band. For example, the access point 104 and the wireless station 102 may communicate in the 2.4GHz frequency band, the 5GHz frequency band, the 6 GHz band, or any combination of these frequency bands. In actual implementations, a WLAN may include one or more access points communicating to a large number of wireless stations. In the present disclosure, the wireless station 102 is also referred to as a station or a wireless client (e.g., a user equipment (UE)). For example, the wireless station 102 may be a mobile device, such as a mobile phone, a tablet computer, and/or a laptop computer. In other examples, the wireless station 102 may be a secondary device, such as a printer and/or a desktop computer. The wireless stations 102 in the wireless communication network can communicate directly with each other on a wireless channel in an ad-hoc network. In addition, the wireless stations 102 may communicate through an access point, herein also referred to as a base station, in an infrastructure-based network. The access point 104 may be connected to a data network, such as the Internet, and enables a wireless station 102 to communicate with other nodes (e.g., other wireless stations 102) or access the data network. In the present disclosure, access points and wireless stations in a WLAN may be referred to collectively as wireless communication devices or wireless devices.

Referring to FIG. 1B, a wireless communication device (e.g., an AP or a wireless station) may include a transceiver (transmitter/receiver) that converts radio signals received on an antenna into digital signals and processors for processing data packets. For example, a wireless communication system 100B may include a responder device 106 and an initiator device 108. The responder device 106 may be a wireless station (e.g., the wireless station 102) or an access point (e.g., the access point 104), and the initiator device 108 may be an access point or a wireless station. Either the responder device 106 or the initiator 108 may implement Fine Timing Measurement (FTM) to determine the distance between the responder device 106 and the initiator device 108. For example, if (e.g., when) the responder device 106 is an access point and the initiator device 108 is a wireless station, the access point (a responder device) may receive a request for Wi-Fi FTM from the wireless station (an initiator device), and the wireless station (the initiator device) may gather all the necessary timestamp information (e.g., departure times from both of the initiator device and the responder device and arrival times at both of the initiator device and the responder device) to calculate the round-trip time (RTT) (e.g., initiating the Wi-Fi FTM protocol). Likewise, if (e.g., when) the responder device 106 is a wireless station and the initiator device 108 is an access point, the wireless station (a responder device) may receive a request for Wi-Fi FTM from the access point (an initiator device), and the access point (the initiator device) may gather all the necessary timestamp information (e.g., departure times from both of the initiator device and the responder device and arrival times at both of the initiator device and the responder device) to calculate the RTT (e.g., initiating the Wi-Fi FTM protocol). By measuring the time it takes for the signal to travel between the responder device 106 and the initiator device 108, the Wi-Fi FTM may be utilized to estimate the distance between the responder device 106 and the initiator device 108, enabling precise outdoor/indoor positioning and other location-based applications.

However, the Wi-Fi FTM may be very noisy and fluctuating. For example, a direct path to antennas between terminals (e.g., the UE and the AP) without obstructions may lower the noise, and a relatively smaller distance between the terminals may be beneficial to the Wi-Fi FTM.

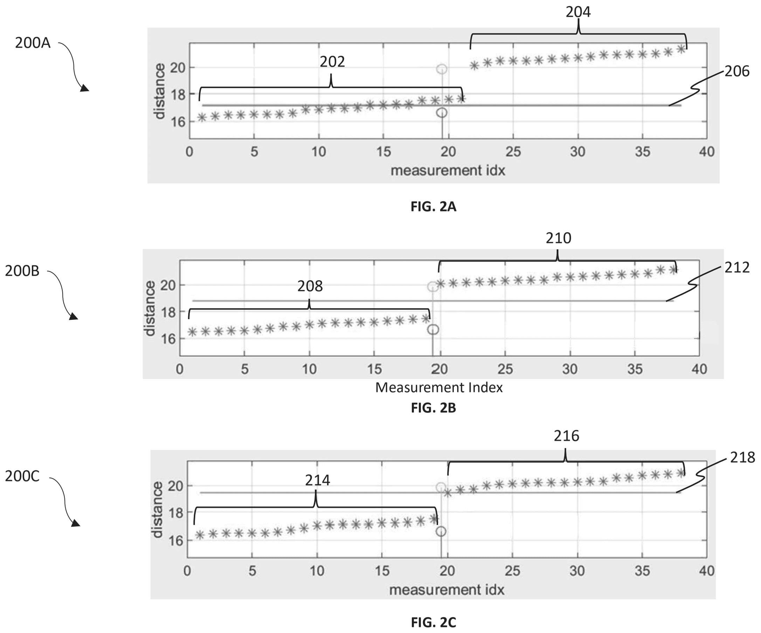

FIGS. 2A to 2C are diagrams depicting example methods for positioning utilizing different clusters of measurements.

In the Wi-Fi FTM, a terminal may estimate multiple measurements based on the time of a signal travelling between an access point and the terminal. In one or more embodiments, the measurements may be estimated based on different access points. The values of the measurements may be within a range and from multiple clusters. Referring to FIG. 2A, a method 200A for positioning may include receiving multiple measurements of distances between an access point and a terminal (e.g., a UE) that are estimated utilizing the Wi-Fi FTM, clustering the measurements into a first cluster of measurements 202 and a second cluster of measurements 204, selecting the first cluster of measurements 202 that have lower values of distance for positioning, and calculating an average value of distance 206 based on the first cluster of measurements 202. For example, the value of the 21^{st} measurement may have a relatively significant difference from the value of the 22^{nd} measurement, therefore, the 1^{st} measurement to the 21^{st} measurement may form the first cluster of measurements 202, and the 22^{nd} measurement to the 38^{th} measurement may form the second cluster of measurements 204. In the embodiment shown in FIG. 2A, the method 200A may select the first cluster of measurements 202 for estimating the location of the terminal, and generate a median value (e.g., the average value of distance 206) based on the first cluster of measurements 202 as the distance between the access point and the terminal.

Referring to FIG. 2B, a method 200B for positioning may include receiving multiple measurements of distances between an access point and a terminal that are estimated utilizing the Wi-Fi FTM, clustering the measurements into a first cluster of measurements 208 and a second cluster of measurements 210, selecting the first cluster of measurements 208 and the second cluster of measurements 210 for positioning, and calculating an average value of distance 212 based on the first cluster of measurements 208 and the second cluster of measurements 210. For example, the value of the 19^{th} measurement may have a relatively significant difference from the value of the 20^{th} measurement, therefore, the 1^{st} measurement to the 19^{th} measurement may form the first cluster of the measurements 208, and the 20^{th} measurement to the 38^{th} measurement may form the second cluster of measurements 210. In the embodiment shown in FIG. 2B, the method 200B may select the first cluster of measurements 208 for estimating the location of the terminal, and generate a median value (e.g., the average value of distance 212) based on the first cluster of measurements 208 and the second cluster of measurement 210 as the distance between the access point and the terminal.

Referring to FIG. 2C, a method 200C for positioning may include receiving multiple measurements of distances between an access point and a terminal that are estimated utilizing the Wi-Fi FTM, clustering the measurements into a first cluster of measurements 214 and a second cluster of measurements 216, selecting the second cluster of measurements 216 that have higher values of distance, and calculating an average value of distance 218 based on the second cluster of measurements 216. For example, the value of the 19^{th} measurement may have a relatively significant difference from the value of the 20^{th} measurement, therefore, the 1^{st} measurement to the 19^{th} measurement may form the first cluster of the measurements 214, and the 20^{th} measurement to the 38^{th} measurement may form the second cluster of measurements 216. In the embodiment shown in FIG. 2C, the method 200C may select the second cluster of measurements 216 for estimating the location of the terminal, and generate a median value (e.g., the average value of distance 218) based on the second cluster of measurements 216 as the distance between the access point and the terminal.

Among the methods 200A, 200B, 200C, the measurements may be selected randomly and easily impacted by noise, interference, nonideal circuitry, clock drift, multipath environment, device orientation, antenna characteristics and placement, numbers of antennas, and/or other unexpected/non-ideal conditions in real-life scenarios. For example, the non-line of sight (NLOS)/line of sight (LOS) conditions may affect the accuracy of the distance that is estimated utilizing the Wi-Fi FTM. In some embodiments, both of the clusters (e.g., the cluster with lower values and the cluster with higher values) are utilized for positioning, in which some unreliable measurements may be included in the estimation, and unnecessary resource waste may be incurred for the estimation. Therefore, it is desirable to select reliable measurements and/or removing invalid/less reliable measurement for positioning to improve the accuracy of the positioning and the efficiency and performance of Wi-Fi communications (e.g., avoiding or reducing measurements on untrustworthy signals for positioning).

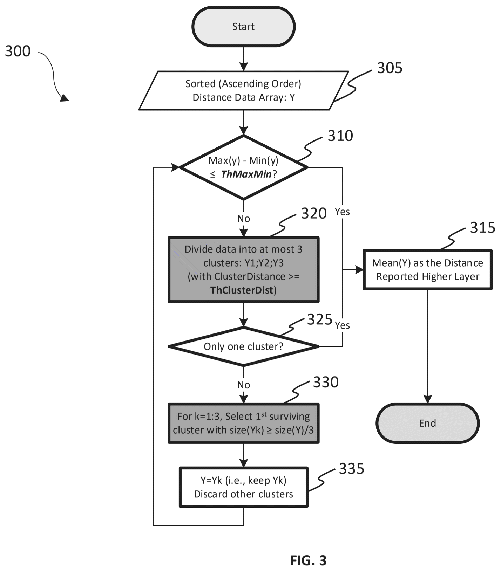

FIG. 3 is a diagram depicting an example method for determining measurements for positioning, according to one or more embodiments. Although FIG. 3 illustrates various operations in a method for determining measurements for positioning, the present disclosure is not limited thereto, and according to various embodiments, the method may include additional operations, or fewer operations, or the order of operations may vary, unless otherwise stated or implied, without departing from the spirit and scope of embodiments according to the present disclosure.

Referring to FIG. 3, a method 300 for determining measurements for positioning is shown. For example, the method 300 may start with receiving data Y, at a UE or an access point, which may include measurements estimated utilizing the FTM.

At operation 305, the method 300 may include arranging/sorting the measurements in an ascending order to form a distance data array (Y). For example, the measurements may include values of distances between the UE and the access point, and the values of the distances may be arranged in the ascending order, e.g., 3, 3.3, 3.5, 4.1, and 4.6, in the unit of meters.

At operation 310, the method 300 may include determining whether the difference between the maximum value in the measurements and the minimum value in the measurements is smaller than or equal to a first threshold (*ThMaxMin*). If the difference between the maximum value in the measurements and the minimum value in the measurements is smaller than or equal to the first threshold, the method 300 may proceed with operation 315. If the difference between the maximum value in the measurements and the minimum value in the measurements is greater than the first threshold, the method 300 may proceed with operation 320. For example, the maximum value in the measurements may be 4.6 (meters), and the minimum value in the measurements may be 3 (meters). The first threshold (e.g., the difference between the maximum value in the measurements and the minimum value in the measurements, *MaxValue - MinValue*) may be set or predetermined as 1 (meter). Therefore, the difference between the maximum value in the measurements and the minimum value in the measurements is 1.6 (meters) which is greater than the first threshold, the method 300 may proceed with operation 320. In one or more embodiments, the first threshold may be set based on environmental conditions. For example, if the method 300 is performed in an indoor environment, the first threshold may be set as a relatively lower value, e.g., 0.5 meter. If the method 300 is performed in an outdoor environment, the first threshold may be set as a relatively higher value, e.g., 5 meters. In one or more embodiments, if the difference between the minimum value in measurements from a first antenna and the minimum value in measurements from the second antenna is substantially zero or very minimum, both of the pluralities of measurements may be selected or considered in the operation 320.

At operation 315, the method 300 may include calculating the mean value of the measurements as the distance report. For example, the values of the distances may include 3, 3.2, 3.3, 3.6, and 3.7, in the unit of meters. The mean value of the measurements is 3.36 calculated based on the above values. The mean value of 3.36 may then be included in the distance report to be utilized for positioning. In one or more embodiments, the distance report may be reported to higher layer.

At operation 320, the method 300 may include dividing the measurements into multiple clusters based on a cluster distance (ClusterDistance), for example, when a cluster distance (e.g., a value difference between two clusters) is greater than or equal to a set value (ThClusterDist). In one or more embodiments, the number of the clusters may be at most three (e.g., Y1, Y2, and Y3). For example, the values of the distances in the measurements may include 3, 3.2, 3.3, 3.6, 3.7, 4.5, 4.6, 4.8, 4.9, and 5.1, in the unit of meters. The measurements may be divided into two clusters (e.g., Y1 and Y2), in which the first cluster Y1 may include the values of 3, 3.2, 3.3, 3.6, and 3.7, and the second cluster Y2 may include the values of 4.5, 4.6, 4.8, 4.9, and 5.1. In one or more embodiments, the clusters may be determined based on a difference between two adjacent values (e.g., the difference between two consecutive clusters). For example, two adjacent values of 3.7 and 4.5 may have a relatively larger difference than other adjacent values, therefore, the clusters may be determined based on the two adjacent values of 3.7 and 4.5, as in the first cluster may end with a value of 3.7 and the second cluster may start with the value of 4.5. In one or more embodiments, the number of clusters may be associated with the number of antennas (e.g., 1, 2, or 4). For example, the clusters may be determined based on the minimum value in measurements from each antenna, e.g., clustering the measurements may start with the minimum value in the measurements sent from an antenna.

At operation 325, the method 300 may include determining whether if there is only one cluster. If there is only one cluster after performing the division of the measurements, the method 300 may proceed with the operation 315. If there are more than one cluster after performing the division of the measurements, the method 300 may proceed with operation 330.

At operation 330, the method 300 may include selecting, from the clusters generated at the operation 320, a cluster (e.g., a surviving cluster) that has a size (e.g., a number and/or a length) of measurements greater than or equal to a second threshold. In one or more embodiments, the second threshold may be a value associated with the total number of the measurements corresponding to the number of measurements in the cluster. For example, the total number of the measurements (e.g., the count of the measurements before the operation 320) is 40, and the second threshold may be set as 13.3 based on one third of the total number of the measurements. In one or more embodiments, the second threshold may be a value based on a suitable percentage of the total number of the measurements, e.g., 1/3, 1/4, 1/5, and/or the like. In one or more other embodiments, the second threshold may be set based on the number of antennas of the access point. If the number of measurements in a cluster is greater than or equal to 13.3 (e.g., the cluster includes 14 or more measurements), the cluster may be selected. In one or more embodiments, the method 300 may select the first cluster among the generated clusters if there are at least two clusters that have a number of measurements in the cluster greater than or equal to the second threshold. The values of the measurements in the first cluster may be lower than the values of measurements in other clusters, which may be more reliable in terms of positioning. In one or more embodiments, a mean value of measurements in the selected cluster (*the_selected_cluster*) is greater than a value of a mean value of measurements in a next cluster (*mean of the_next_cluster*) minus a difference value (*Th_cluster_diff*) between the selected cluster and the next cluster. The difference value may be utilized as the first threshold. The next cluster may be a cluster that is next to the selected cluster, or a cluster that has next higher values in measurements than the selected cluster.

At operation 335, the method 300 may include keeping the selected cluster and discarding the remaining clusters. For example, the cluster that is selected in the operation 330 may be kept for the operation 310, and the cluster(s) that is not selected in the operation 330 (e.g., a cluster that has a number of measurements smaller than the second threshold) may be discarded or removed, e.g., not being considered in positioning. The method 300 may further determining whether the difference between the maximum value and the minimum value in the measurements of the selected cluster is smaller than or equal to the first threshold (e.g., the operation 310). If the difference between the maximum value and the minimum value of the measurements in the selected cluster is smaller than or equal to the first threshold, the selected cluster may be utilized in positioning (e.g., the operation 315). If the difference between the maximum value and the minimum value in the measurements of the selected cluster is greater than the first threshold, the selected cluster may be divided into sub-clusters (e.g., the operation 320) until the difference between the maximum value and the minimum value of measurements in a selected sub-cluster is smaller than or equal to the first threshold. To ensure the accuracy of an estimated distance between the UE and the AP or a location of the UE (e.g., an initiator device), clustering measurements may be iteratively performed until measurements in a selected cluster have a minimal difference between the maximum value (e.g., to ensure that the outlier is being removed) and the minimum value and have a sufficient number of measurements (e.g., at least 1/3 of raw data (the original measurements) are included). In one or more embodiments, the remaining data (e.g., the measurements that are not selected) at the operation 335 may be more likely Gaussian or Uniformly distributed, therefore a mean value generated based on the remaining data may also be considered or applied to the distance report.

With analysis of the FTM mechanism and measurements, lower values may be more likely reliable (e.g., less chance to have obstacles in the path to antenna) whereas values that are either too high or too low may be likely outliers. Therefore, the method 300 may be applied to iteratively identify reliable measurements and discard outlier measurements to eventually determine a plurality of measurements that are closely clustered for a distance report.

By utilizing the method 300 for determining measurements for positioning, reliable measurements may be determined efficiently (e.g., selecting measurements with better LOS/NLOS conditions, selecting measurements having lower noise, removing incorrect/unreliable measurements, removing outliers, and/or the like), such that the resource of the UE and/or the access point may be utilized efficiently, and the performance of the UE and/or the access point may be improved by reducing unnecessary computation on unreliable measurements.

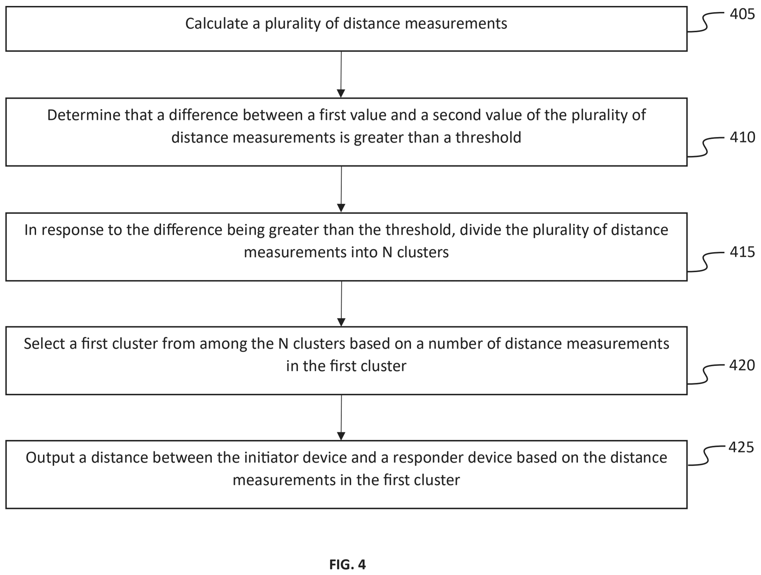

FIG. 4 is a flowchart depicting a method for determining measurements for positioning, according to some embodiments of the present disclosure. Although FIG. 4 illustrates various operations in a method for determining measurements for positioning, one or more embodiments according to the present disclosure are not limited thereto, and according to one or more embodiments, the method may include additional operations or fewer operations, or the order of operations may vary, unless otherwise stated or implied, without departing from the spirit and scope of embodiments according to the present disclosure.

Referring to FIG. 4, at operation 405, an initiator device (e.g., the initiator device 108; a UE or an access point) may calculate a plurality of distance measurements. For example, a responder device (e.g., the responder device 106; an access point or a UE) may receive a request for FTM from the initiator device, and the initiator device may start to calculate the distance measurements. In one or more embodiments, each of the plurality of distance measurements may include a value indicating an estimated distance between the initiator device and a responder device. In one or more embodiments, upon calculating the plurality of the distance measurements, the initiator device may be further configured to arrange the plurality of distance measurements in an ascending order from a minimum value of the plurality of distance measurements to a maximum value of the plurality of distance measurements.

At operation 410, the initiator device may determine that a difference between a first value and a second value of the plurality of distance measurements may be greater than a threshold. In one or more embodiments, the first value may a maximum value of the plurality of distance measurements, and the second value may be a minimum value of the plurality of distance measurements. In one or more embodiments, the threshold may be a value associated with an estimated distance between the initiator device and the responder device.

At operation 415, in response to the difference being greater than the threshold, the initiator device may divide the plurality of distance measurements into N clusters. In one or more embodiments, N may be an integer smaller than or equal to three.

At operation 420, the initiator device may select a first cluster from among the N clusters based on a number of distance measurements in the first cluster. In one or more embodiments, the selecting of the first cluster may include determining that a number of the distance measurements in the first cluster may be greater than a value associated with a percentage of a total number of the plurality of distance measurements, and selecting the first cluster for outputting the distance between the initiator device and the responder device. In one or more embodiments, the selecting of the first cluster may include determining that a number of the distance measurements in the first cluster is greater than one third of a total number of the plurality of distance measurements, and selecting the first cluster for outputting the distance between the initiator device and the responder device. In one or more embodiments, the selecting of the first cluster may include determining that a difference between a maximum value and a minimum value of the distance measurements in the first cluster may be smaller than or equal to the threshold, and selecting the first cluster for outputting the distance between the initiator device and the responder device.

At operation 425, the initiator device may output a distance between the initiator device and the responder device based on the distance measurements in the first cluster.

In one or more embodiments, in response to the difference being smaller than or equal to the threshold, the initiator device may be further configured to output the distance between the initiator device and the responder device based on the plurality of distance measurements.

In one or more embodiments, the initiator device may further divide the first cluster into M clusters and select a second cluster from among the M clusters based on a number of distance measurements in the second cluster.

In one or more embodiments, the method disclosed in FIG. 4 may be performed/implemented at either an AP or a UE. For example, the AP or the UE may be an initiator device calculating measurements estimated utilizing the Wi-Fi FTM and select reliable measurement for positioning utilizing the method disclosed in FIG. 4.

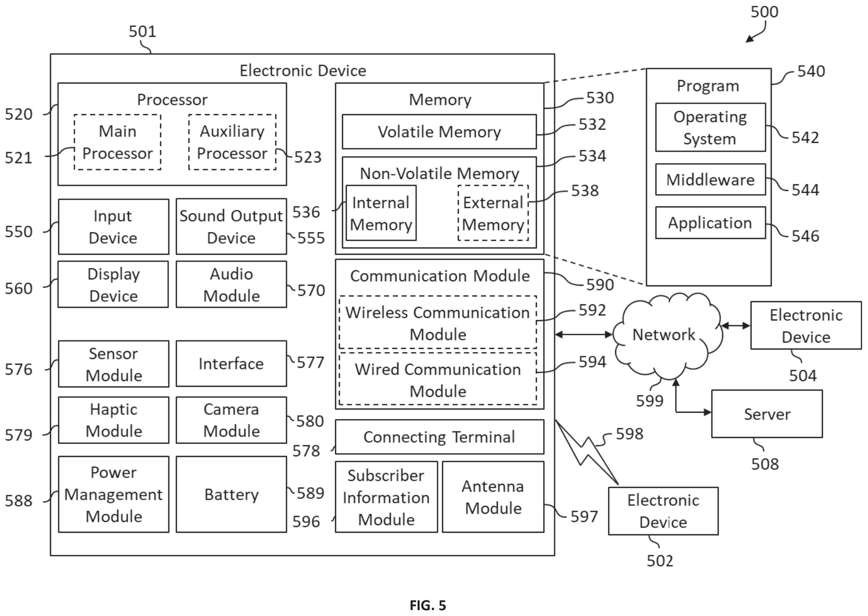

FIG. 5 is a block diagram of an electronic device in a network environment, according to some embodiments of the present disclosure.

Referring to FIG. 5, an electronic device 501 in a network environment 500 may communicate with an electronic device 502 via a first network 598 (e.g., a short-range wireless communication network), or with an electronic device 504 or a server 508 via a second network 599 (e.g., a long-range wireless communication network). The electronic device 501 may communicate with the electronic device 504 via the server 508. The electronic device 501 may include a processor 520, a memory 530, an input device 550, a sound output device 555, a display device 560, an audio module 570, a sensor module 576, an interface 577, a haptic module 579, a camera module 580, a power management module 588, a battery 589, a communication module 590, a subscriber identification module (SIM) card 596, and/or an antenna module 597. In one embodiment, at least one of the components (e.g., the display device 560 or the camera module 580) may not be provided from the electronic device 501, or one or more other components may be added to the electronic device 501. Some of the components may be implemented as a single integrated circuit (IC). For example, the sensor module 576 (e.g., a fingerprint sensor, an iris sensor, or an illuminance sensor) may be embedded in the display device 560 (e.g., a display).

The processor 520 may execute software (e.g., a program 540) to control at least one other component (e.g., a hardware or a software component) of the electronic device 501 coupled to the processor 520, and may perform various data processing or computations. For example, the processor 520 may execute instructions to perform methods disclosed in FIGS. 3 and 4.

As at least a part of the data processing or computations, the processor 520 may load a command or data received from another component (e.g., the sensor module 576 or the communication module 590) in volatile memory 532, may process the command or the data stored in the volatile memory 532, and may store resulting data in non-volatile memory 534. The processor 520 may include a main processor 521 (e.g., a central processing unit or an application processor (AP)), and an auxiliary processor 523 (e.g., a graphics processing unit (GPU), an image signal processor (ISP), a sensor hub processor, or a communication processor (CP)) that is operable independently from, or in conjunction with, the main processor 521. Additionally or alternatively, the auxiliary processor 523 may be adapted to consume less power than the main processor 521, or to execute a particular function. The auxiliary processor 523 may be implemented as being separate from, or a part of, the main processor 521.

The auxiliary processor 523 may control at least some of the functions or states related to at least one component (e.g., the display device 560, the sensor module 576, or the communication module 590), as opposed to the main processor 521 while the main processor 521 is in an inactive (e.g., sleep) state, or together with the main processor 521 while the main processor 521 is in an active state (e.g., executing an application). The auxiliary processor 523 (e.g., an image signal processor or a communication processor) may be implemented as part of another component (e.g., the camera module 580 or the communication module 590) functionally related to the auxiliary processor 523.

The memory 530 may store various data used by at least one component (e.g., the processor 520 or the sensor module 576) of the electronic device 501. The various data may include, for example, software (e.g., the program 540) and input data or output data for a command related thereto. The memory 530 may include the volatile memory 532 or the non-volatile memory 534.

The program 540 may be stored in the memory 530 as software, and may include, for example, an operating system (OS) 542, middleware 544, or an application 546.

The input device 550 may receive a command or data to be used by another component (e.g., the processor 520) of the electronic device 501, from the outside (e.g., a user) of the electronic device 501. The input device 550 may include, for example, a microphone, a mouse, or a keyboard.

The sound output device 555 may output sound signals to the outside of the electronic device 501. The sound output device 555 may include, for example, a speaker or a receiver. The speaker may be used for general purposes, such as playing multimedia or recording, and the receiver may be used for receiving an incoming call. The receiver may be implemented as separate from, or as a part of, the speaker.

The display device 560 may visually provide information to the outside (e.g., to a user) of the electronic device 501. The display device 560 may include, for example, a display, a hologram device, and/or a projector, and may include control circuitry to control a corresponding one of the display, the hologram device, and/or the projector. The display device 560 may include touch circuitry adapted to detect a touch, and/or may include sensor circuitry (e.g., a pressure sensor) adapted to measure the intensity of force incurred by the touch.

The audio module 570 may convert a sound into an electrical signal and vice versa. The audio module 570 may obtain the sound via the input device 550 and/or may output the sound via the sound output device 555 or a headphone of an external electronic device 502 directly (e.g., wired) or wirelessly coupled to the electronic device 501.

The sensor module 576 may detect an operational state (e.g., power or temperature) of the electronic device 501, and/or an environmental state (e.g., a state of a user) external to the electronic device 501. The sensor module 576 may then generate an electrical signal and/or a data value corresponding to the detected state. The sensor module 576 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, and/or an illuminance sensor.

The interface 577 may support one or more specified protocols to be used for the electronic device 501 to be coupled to the external electronic device 502 directly (e.g., wired) or wirelessly. The interface 577 may include, for example, a high-definition multimedia interface (HDMI), a universal serial bus (USB) interface, a secure digital (SD) card interface, and/or an audio interface.

A connecting terminal 578 may include a connector via which the electronic device 501 may be physically connected to the external electronic device 502. The connecting terminal 578 may include, for example, an HDMI connector, a USB connector, an SD card connector, and/or an audio connector (e.g., a headphone connector).

The haptic module 579 may convert an electrical signal into a mechanical stimulus (e.g., a vibration or a movement) and/or an electrical stimulus, which may be recognized by a user via tactile sensation or kinesthetic sensation. The haptic module 579 may include, for example, a motor, a piezoelectric element, and/or an electrical stimulator.

The camera module 580 may capture a still image and/or moving images. The camera module 580 may include one or more lenses, image sensors, image signal processors, and/or flashes. The power management module 588 may manage power that is supplied to the electronic device 501. The power management module 588 may be implemented as at least a part of, for example, a power management integrated circuit (PMIC).

The battery 589 may supply power to at least one component of the electronic device 501. The battery 589 may include, for example, a primary cell that is not rechargeable, a secondary cell that is rechargeable, and/or a fuel cell.

The communication module 590 may support establishing a direct (e.g., wired) communication channel and/or a wireless communication channel between the electronic device 501 and the external electronic device (e.g., the electronic device 502, the electronic device 504, and/or the server 508), and may support performing communication via the established communication channel. The communication module 590 may include one or more communication processors that are operable independently from the processor 520 (e.g., the AP), and may support a direct (e.g., wired) communication and/or a wireless communication. The communication module 590 may include a wireless communication module 592 (e.g., a cellular communication module, a short-range wireless communication module, and/or a global navigation satellite system (GNSS) communication module) and/or a wired communication module 594 (e.g., a local area network (LAN) communication module or a power line communication (PLC) module). A corresponding one of these communication modules may communicate with the external electronic device via the first network 598 (e.g., a short-range communication network, such as BLUETOOTHTM, wireless-fidelity (Wi-Fi) direct, and/or a standard of the Infrared Data Association (IrDA)), or via the second network 599 (e.g., a long-range communication network, such as a cellular network, the Internet, and/or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 592 may identify and authenticate the electronic device 501 in a communication network, such as the first network 598 and/or the second network 599, utilizing subscriber information (e.g., international mobile subscriber identity (IMSI)) stored in the subscriber identification module 596.

The antenna module 597 may transmit or receive a signal and/or power to or from the outside (e.g., the external electronic device) of the electronic device 501. The antenna module 597 may include one or more antennas. The communication module 590 (e.g., the wireless communication module 592) may select at least one of the one or more antennas appropriate for a communication scheme used in the communication network, such as the first network 598 and/or the second network 599. The signal and/or the power may then be transmitted and/or received between the communication module 590 and the external electronic device via the selected at least one antenna.

Commands or data may be transmitted and/or received between the electronic device 501 and the external electronic device 504 via the server 508 coupled to the second network 599. Each of the electronic devices 502 and 504 may be a device of a same type as, or a different type, from the electronic device 501. All or some of operations to be executed at the electronic device 501 may be executed at one or more of the external electronic devices 502 or 504, or server 508. For example, if the electronic device 501 should perform a function or a service automatically, or in response to a request from a user or another device, the electronic device 501, instead of, or in addition to, executing the function or the service, may request the one or more external electronic devices to perform at least a part of the function or the service. The one or more external electronic devices receiving the request may perform the at least a part of the function or the service requested, or an additional function or an additional service related to the request and transfer an outcome of the performing to the electronic device 501. The electronic device 501 may provide the outcome, with or without further processing of the outcome, as at least a part of a reply to the request. To that end, cloud computing, distributed computing, and/or client-server computing technology may be utilized, for example.

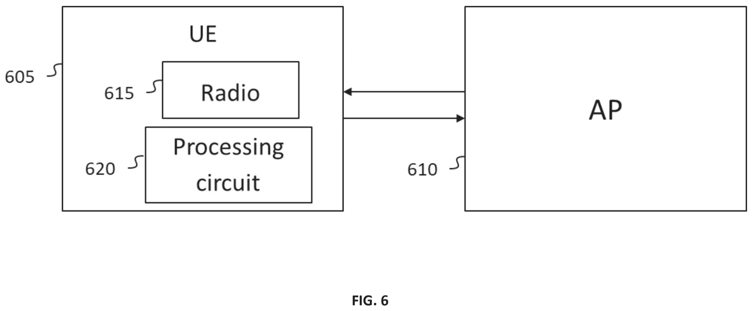

FIG. 6 shows a system including a UE 605 and an AP 610, in communication with each other. The UE 605 may include a radio 615 and a processing circuit (or a means for processing) 620, which may perform one or more suitable methods disclosed herein, e.g., the methods illustrated in FIGS. 3 and 4. For example, the processing circuit 620 may receive, via the radio 615, transmissions (e.g., a request for FTM) from the AP 610, and the processing circuit 620 may transmit, via the radio 615, signals to the AP 610. The AP 610 may perform one or more suitable methods disclosed herein, e.g., the methods illustrated in FIGS. 3 and 4. Likewise, the UE 605 may send a request for FTM to the AP 610, and the AP 610 may implement one or more suitable methods disclosed herein, e.g., the methods illustrated in FIGS. 3 and 4.

Embodiments of the subject matter and the operations described in this specification may be implemented in digital electronic circuitry, or in computer software, firmware, and/or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, and/or to control the operation of data-processing apparatus. Alternatively or additionally, the program instructions can be encoded on an artificially-generated propagated signal, e.g., a machine-generated electrical, optical, and/or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, and/or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices and/or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations may be depicted in the drawings in a particular order, this should not be understood as requiring that such operations be performed in the particular order shown or in any sequential order, or that all illustrated operations be performed, to achieve desirable results. In certain circumstances, multitasking and parallel processing may be advantageous or suitable. Moreover, the separation of various system components in the embodiments described above should not be understood as requiring such separation in all embodiments, and it should be understood that the described program components and systems can generally be integrated together in a single software product or packaged into multiple software products.

Thus, aspects of some embodiments of the present disclosure have been described herein. Other embodiments are within the scope of the following claims and their equivalents. In some cases, the actions set forth in the claims may be performed in a different order and still achieve desirable or desired results. Additionally, the processes depicted in the accompanying figures do not necessarily require the particular order shown, or sequential order, to achieve desirable or desired results. In certain implementations, multitasking and parallel processing may be advantageous, suitable or desirable.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. A method comprising:
calculating (405), by an initiator device (108), a plurality of distance measurements;
determining (410), by the initiator device (108), that a difference between a first value and a second value of the plurality of distance measurements is greater than a threshold;
in response to the difference being greater than the threshold, dividing (415), by the initiator device (108), the plurality of distance measurements into N clusters (202, 204; 208, 210; 214, 216);
selecting (420), by the initiator device (108), a first cluster from among the N clusters based on a number of distance measurements in the first cluster; and
outputting (425), by the initiator device (108), a distance between the initiator device (108) and a responder device (106) based on the distance measurements in the first cluster.

2. The method of claim 1, wherein each of the plurality of distance measurements comprises a value indicating an estimated distance between the initiator device (108) and the responder device (106), and
wherein the first value is a maximum value among the plurality of distance measurements, and the second value is a minimum value among the plurality of distance measurements.

3. The method of claim 1 or 2, wherein the calculating (405) of the plurality of distance measurements comprises:
arranging the plurality of distance measurements in an ascending order from a minimum value in the plurality of distance measurements to a maximum value in the plurality of distance measurements.

4. The method of any one of claims 1 to 3, wherein the selecting (420) of the first cluster comprises:
determining that the number of the distance measurements in the first cluster is greater than a value associated with a percentage of a total number of the plurality of distance measurements; and
selecting the first cluster for outputting the distance between the initiator device (108) and the responder device (106).

5. The method of any one of claims 1 to 3, wherein the selecting of the first cluster comprises:
determining that the number of the distance measurements in the first cluster is greater than one N^{th} of a total number of the plurality of distance measurements; and
selecting the first cluster for outputting the distance between the initiator device (108) and the responder device (106).

6. The method of any one of claims 1 to 5, further comprising:
dividing, by the initiator device (108), the first cluster into M clusters; and
selecting, by the initiator device (108), a second cluster from among the M clusters based on a number of distance measurements in the second cluster.

7. The method of any one of claims 1 to 6, further comprising:
in response to the difference being smaller than or equal to the threshold, outputting the distance between the initiator device (108) and the responder device (106) based on the plurality of distance measurements.

8. The method of any one of claims 1 to 7, wherein the selecting of the first cluster comprises:
determining that a difference between a maximum value and a minimum value of the distance measurements in the first cluster is smaller than or equal to the threshold; and
selecting the first cluster for outputting the distance between the initiator device (108) and the responder device (106).

9. An initiator device comprising a processing circuit (620), the processing circuit (620) being configured to perform:
calculating (405) a plurality of distance measurements;
determining (410) that a difference between a first value and a second value of the plurality of distance measurements is greater than a threshold;
in response to the difference being greater than the threshold, dividing (415) the plurality of distance measurements into N clusters (202, 204; 208, 210; 214, 216);
selecting (420) a first cluster from among the N clusters based on a number of distance measurements in the first cluster; and
outputting (425) a distance between the initiator device (108) and a responder device (106) based on the distance measurements in the first cluster.

10. The initiator device of claim 9, wherein each of the plurality of distance measurements comprises a value indicating an estimated distance between the initiator device (108) and the responder device (106), and
wherein the first value is a maximum value among the plurality of distance measurements, and the second value is a minimum value among the plurality of distance measurements.

11. The initiator device of claim 9 or 10, wherein the calculating of the plurality of distance measurements comprises:
arranging the plurality of distance measurements in an ascending order from a minimum value in the plurality of distance measurements to a maximum value in the plurality of distance measurements.

12. The initiator device of any one of claims 9 to 11, wherein the selecting (420) of the first cluster comprises:
determining that a number of the distance measurements in the first cluster is greater than a value associated with a percentage of a total number of the plurality of distance measurements; and
selecting the first cluster for outputting the distance between the initiator device (108) and the responder device (106).

13. The initiator device of any one of claims 9 to 11, wherein the selecting of the first cluster comprises:
determining that the number of the distance measurements in the first cluster is greater than one N^{th} of a total number of the plurality of distance measurements; and
selecting the first cluster for outputting the distance between the initiator device (108) and the responder device (106).

14. The initiator device of any one of claims 9 to 13, wherein N is an integer smaller than or equal to three.

15. The initiator device of any one of claims 9 to 14, wherein the processing circuit is further configured to perform:
in response to the difference being smaller than or equal to the threshold, outputting the distance between the initiator device (108) and the responder device (106) based on the plurality of distance measurements.
